# EUROPEAN PATENT APPLICATION

(11) **EP 2 511 557 A1**
(43) Date of publication of application: **17.10.2012**
(21) Application number: 12002565.5
(22) Date of filing: 11.04.2012
(51) Int. Cl.: F16D 41/02, F16F 15/14, F16H 55/36

(54) **Overrunning pulley with elastomer torsional damping system**

(30) Priority: 11.04.2011 BR MU9100757 U
(71) Applicant: ZEN SA INDUSTRIA METALURGICA, Santa Catarina (BR)
(72) Inventor: Mortari, Paulo Augusto Martins, Brusque Santa Catarina (BR)
(74) Representative: Lorente Berges, Ana

(57) **Abstract**

The present model refers to the technical field of parts for the automobile sector, more specifically an overrunning pulley (1) with elastomer torsional damping system (4) used preferably in alternator coupled to the crankshaft through a belt, with the aim to absorb and reduce torsional vibrations, which the entire system coupled to the aforementioned belt is subjected, as well as mitigate the rotation variations that are transmitted to the alternator through the one-way clutch (3) by rollers (3A).

## Description

### Presentation

The present model refers to the technical field of parts for the automobile sector, more specifically a overrunning pulley with elastomer torsional damping system used preferably in alternator coupled to the crankshaft through a belt with the aim to absorb and reduce torsional vibrations, which the entire system coupled to the aforementioned belt is subjected, as well as mitigate the rotation variations that are transmitted to the alternator through the one-way clutch by rollers.

### State of the art

The alternator pulley has the function of transmitting the torque from the internal combustion engine to the alternator through a belt that passes through a pulley fixed to the engine crankshaft. The friction between the belt and pulley transmits the torque to the alternator rotor shaft. The alternator pulley firmly coupled (without overrunning system) on the alternator rotor shaft had a great technological development with the inclusion of the overrunning system.

However, due to the reduced slow run of the engines and/or the inclusion of partial cylinder deactivation systems, which seek to reduce the emissions and reduce consumption, a better insulation of the torsional vibrations became necessary for the entire system of accessories coupled to the said belt.

Therefore, new alternator pulley designs were developed so that this could perform this additional function. In this new functional line, two systems can be added to this damping characteristic in the alternator pulley.

The first explained herein does not have the overrunning function once the connection between the shaft, which is coupled to the alternator, and the external profile of the pulley, responsible for transmitting the torque from the crankshaft pulley, is made by damping elements that when compressed enable only one small degree of rotation between the shaft and pulley. This causes the component not to be effective in reducing the noise generated by the movement (slip) between the pulley and belt, which occurs in great rotation variations imposed by the accelerations and decelerations of the engine.

This system also does not reduce the wear of the belt of the accessories once it does not conserve the rotary inertia of the alternator in the decelerations, therefore, requiring a greater torque than necessary in a system with overrunning.

Another existing concept uses a helical spring as a form of coupling between the shaft connected to the alternator and the external part of the pulley, responsible for the transmission of the torque from the engine.

This system allows the said pulley to have the overrunning function once the inertia of the alternator during decelerations makes the shaft exert a force against the said spring in a way that this enables the relative movement between the external part and the shaft, However, the increased minimum force for this spring to reach the torsion necessary for this movement to exist makes the efficiency of the overrunning to be low, and this characteristic can cause the same disadvantages observed in a rigid pulley.

Once the spring does not have the properties necessary to damp the vibrations, it is necessary to add a plastic element to the system that, by friction, dissipates energy from the compression of the spring during torque transmission to the alternator. This system has the disadvantage of suffering severe wear, therefore, a limited useful life or even suffering early failures.

PI0604093-4 *"Pulley with overrunning"* of the same applicant refers to a pulley with overrunning system by rollers, which uses a plurality of cam surfaces made internally in an external ring that defines a single part with the external profile of the pulley, that is, the latter and the cam surfaces are made on the same part, presenting a constructive device such that the centrifugal force operates reducing the overrunning torque with the increase of the rotation. This construction model is different from the previous models (that use an assembly of three parts), and prevents the overrunning pulley from being affected by heat variations in the environment (as the interference of the assembly can vary with the temperature changes), guaranteeing the full transmission of the torque from the engine to the alternator, that is, eliminating the relative movement between the external ring and the external profile of the alternator pulley, Furthermore, it presents a simpler manufacturing process, eliminating machining and mounting stages and making the pulley more robust, and resistant. This system is more efficient that the models found in the start of the art and also perfects the construction process of other pulleys that work with the same principle.

The pulleys with overrunning system by rollers are more efficient, however, due to torsional vibrations generated by strong acyclism inherent to combustion engines in low rotations, results in excess vibrations that wear the assemblies, consequently reducing the useful life of the pulleys.

### Improvements on the current state of the art

The focus of the automobile industry is always the search for innovative solutions that can increase the durability and efficiency of the components. Meeting the need and solution to the problems presented, an overrunning pulley with elastomer torsional damping system was developed.

This model presents the same construction principle and advantages of PI0604093-4, of the same applicant, where the cam, external ring and external profile, which makes up the overrunning system that are made in a single monoblock, and has the following innovation: an elastomer torsional damping system. In assembly, the two systems comply with the most severe durability demands, having a higher efficiency in the conservation of the rotary inertia of the alternator, due to its more efficient overrunning and also more effective damping due to energy absorption by the elastomer.

Once the overrunning system uses rollers associated to a cam to transmit the torque in one direction, it is able to obtain a low overrunning torque. Therefore, the rotary inertia of the alternator is conserved with greater efficiency in the engine decelerations. This guarantees a higher durability of the accessory belt, as well as reduces the orders for these components. It also avoids the possible noises generated by the slip of this belt in the sudden speed changes, commonly associated to speed change of the vehicle or when turning the vehicle off. The smaller overrunning torque makes the pulley to be more efficient in eliminating noises because it becomes more sensitive to absorb the high frequency and low amplitude vibrations.

Due to the innovative elastomer damping system, the torsional vibrations generated by the strong acyclism inherent to the combustion engines in low rotations and/or due to the cylinder deactivation system, are effective absorbed and the energy is dissipated by the hysteresis effect. This principle does not cause excess wear and has an excellent result in the insulation of the vibrations for all the accessories connected to the belt that passes through the alternator, and the insulator is much superior to that generated by the dissipation of energy by friction.

For the aforementioned reasons, the model herein presents great evolution in components existing in the market today.

### Description of the model

The present model consists of a pulley to be coupled to the automobile alternators, which in turn is made up of a deflection washer; two rollers aligned in parallel; one washer; one central monoblock containing the external profile made in a single part, with external ring and cam, which makes up the overrunning assembly with rollers, the oblong springs and plastic cage. Consisting of an elastomer torsional damping system comprising: a retaining ring; an external shaft consisting of a cylindrical tube and front cylindrical cup with channels on the central wall; an elastomer in the shape of a ring containing interne channels and external ridges that are inserted on the cylindrical cup; two cylindrical bushings; and one internal shaft consisting of a cylindrical tube and a head on a ring, with a spline insert for the mounting tool and external ridges that are inserted in the elastomer element.

The elements that make up the damping system can be made with different dimensions, positions and configurations in order to adapt to any pulley model and/or mechanical necessities, to perform the appropriate insulation of the torsional vibrations in the dynamic system where it is applied.

### Description of the operation

The model has its operation from the actuation of the internal combustion engine of the vehicle. When the engine starts to operate, the pulley connected to the crankshaft transmits the torque from it through a belt to all the accessories. The alternator, which has greater inertia and has more influence on the dynamic behavior of the entire system.

Through the overrunning system by rollers and wedge, during the decelerations, the system enables the free turn of the alternator rotor, this way conserving its rotary inertia.

When a rotation reduction of the motor occurs, the external part of the pulley accompanies this behavior. The alternator shaft tends to maintain its rotation due to the inertia of the rotor, causing its rotation to be higher than that of the external part of the pulley, pulling the rollers of the overrunning system to the position of no torque transmission. Therefore, the pulley operates in overrunning, enabling the conservation of the rotary inertia of the alternator, bringing all the benefits aforementioned in this patent application.

During accelerations, the external part of the pulley tends to acquire a greater rotation than that of the alternator shaft, pulling the rollers to the lock position and consequent torque transmission. These rollers are pulled against the external part of the external shaft, which in turn is connected to the internal shaft only by the elastomer element.

As the internal shaft is what is effectively coupled to the alternator, the entire torque transmission, be it in accelerations or decelerations, is dampened by the elastomer. Thereby making the insulation of the torsional vibrations effective, protecting the alternator as well as reducing the transmission of these vibrations to the belt and consequently to all the accessories coupled to it.

The elastomer absorbs the energy from the excitation of the system by the torsional vibration and dissipates it through hysteresis, therefore, transmitting this excitation with a high damping degree. This element can be used in different dimensions and mechanical characteristics to ensure a better insulation range of the vibrations in each dynamic system applied.

Due to the functional characteristics mentioned above, the overrunning pulley with elastomer torsional damping system consists of a model that brines great benefits to the systems of vehicle accessories with internal combustion engine, providing a superior performance in terms of benefits offered by the overrunning system as well as the damping of torsional vibrations, with a superior durability.

The objectives, advantages and other important characteristics of the present model can he easily understood when read together with the attached figures, which are:
Figure 01 shows an exploded / front view of the overrunning pulley with elastomer torsional damping system.
Figure 02 shows an exploded I rear view of the overrunning pulley with elastomer torsional damping system.
Figure 03 shows a perspective view of the overrunning pulley with elastomer torsional damping system.
Figure 04 shows a side section view of the overrunning pulley with elastomer torsional damping system.
Figure 05 shows a top section view of the overrunning pulley with elastomer torsional damping system.

As shown in the figures in annex that illustrate and integrate the present model "Overrunning Pulley with Elastomer Torsional Damping System", it consists of a pulley (1) to be coupled preferably to automobile alternators, which comprises a deflection washer (A); two rollers (B) aligned in parallel; one washer (C); a central monoblock (2) containing the external poly-v profile (2A) made in a single part, with the external ring (2B) and cam (2C), which makes up the overrunning assembly (3) with rollers (3A), oblong springs (3B) and plastic cage (3C); consisting of an elastomer torsional damping system (4), comprising: a retaining ring (4A); an external shaft (4B); an elastomer (4C); two cylindrical bushings (4D); and an internal shaft (4E) with spline insert for the mounting tool (4F).

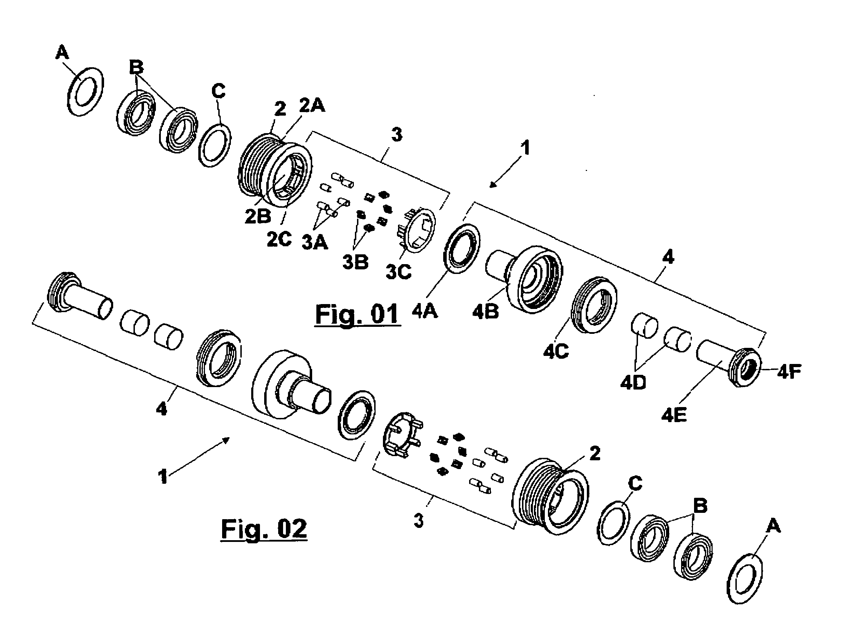

Figures 01 and 02 show the pulley (1) with the deflection washer (A); the two rollers (B); the washer (C); the central monoblock (2), with external poly-v profile (2A) made in a single part, with external ring (2B) and cam (2C); the overrunning assembly (3), with rollers (3A), oblong springs (3B) and plastic cage (3C); elastomer torsional damping system (4), with retaining ring (4A); external shaft (4B); the elastomer (4C); two cylindrical bushings (4D); and internal shaft (4E) with a spline insert for the mounting tool (4F).

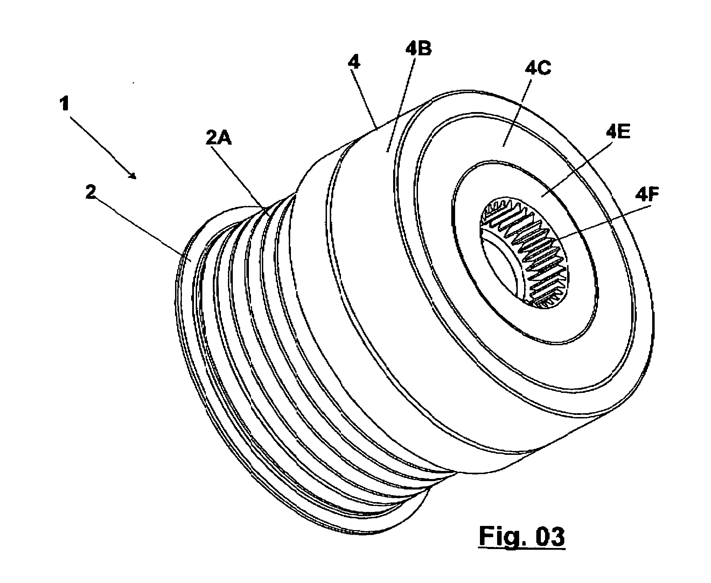

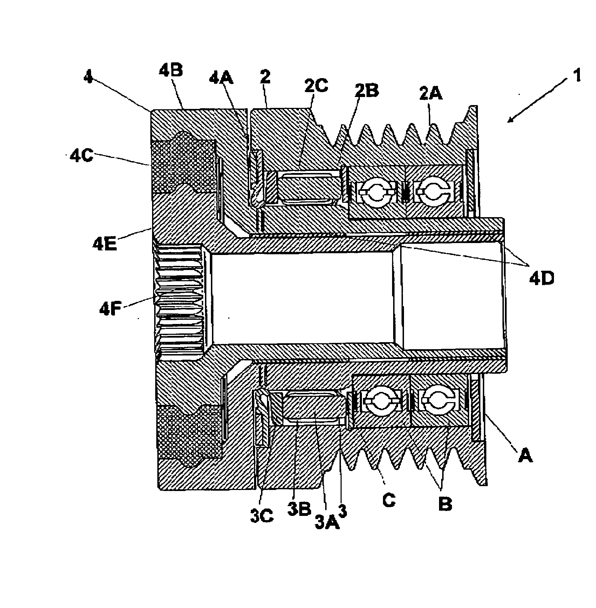

Figure 03 shows the pulley (1) showing the central monoblock (2); the elastomer torsional damping system (4), external shaft (4B); the elastomer (4C); and internal shaft (4E) with a spline insert for the mounting tool (4F).

Figure 04 shows a section view of the pulley (1), showing the mounted assembly, consisting of the deflection washer (A); the two rollers (B); the washer (C); the central monoblock (2), with external poly-v profile (2A) made in a single part, with external ring (2B) and cam (2C); the overrunning assembly (3), with rollers (3A), oblong springs (3B) and plastic cage (3C); elastomer torsional damping system (4), with retaining ring (4A); external shaft (4B); the elastomer (4C); two cylindrical bushings (4D); and internal shaft (4E) with a spline insert for the mounting tool (4F).

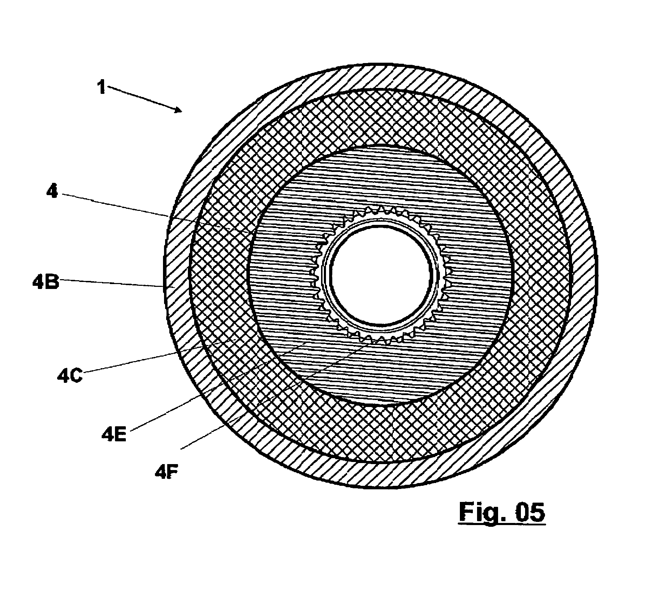

Figure 05 shows the top section view of the pulley (1) showing the elastomer torsional damping system (4), with external shaft (4B); the elastomer (4C); and internal shaft (4E) with a spline insert for the mounting tool (4F).

The present model consists of a pulley to be coupled to the automobile alternators that suffer with the strong acyclism inherent to combustion engines, and it has a greatest inertia of all the system of accessories, having great influence in the dynamic behavior in all the accessories coupled to the belt; it has a low overrunning torque, which results in the conservation of the rotary inertia of the alternator, providing benefits to the durability of the belt; avoiding the noises caused by the slip of the same over the pulley; and especially absorbs the low frequency torsional vibrations generated by acyclism of the internal combustion engines. This acyclism is observed even more due to the increasing tendency of the slow run reduction of engines and/or inclusion of the cylinder deactivation systems, which aims to reduce the fuel consumption, as well as reduce the emission of pollutant gases.

The parts of this assembly can vary in size, shapes and materials to adapt to any type of automobile alternator system, but always maintaining the same characteristics of the present model.

In view of the arguments that have been stated herein, it is a product that will be well received by assemblers and final consumers because it is an extremely efficient and economic product that has several improvements in relation to the current systems.

## Claims

1. "OVERRUNNING PULLEY WITH ELASTOMER TORSIONAL DAMPING SYSTEM", consists of a pulley (1) to be coupled preferably to automobile alternators, which comprises a deflection washer (A); two rollers (B) aligned in parallel; one washer (C); a central monoblock (2) containing the external poly-v profile (2A) made in a single part, with the external ring (2B) and cam (2C), which makes up the overrunning assembly (3) with rollers (3A), oblong springs (3B) and plastic cage (3C); **characterized by** an elastomer torsional damping system (4), comprising: a retaining ring (4A); an external shaft (4B); an elastomer (4C); two cylindrical bushings (4D); and an internal shaft (4E) with spline Insert for the mounting tool (4F).

2. "OVERRUNNING PULLEY WITH ELASTOMER TORSIONAL DAMPING SYSTEM", according to claim 1 is **characterized by** the elastomer torsional damping system to be made with different dimensions, positions and configurations, to adapt to any pulley model and/or mechanical necessities, so as to perform the appropriate insulation of the torsional vibrations in the dynamic system that will be applied.

3. "OVERRUNNING PULLEY WITH ELASTOMER TORSIONAL DAMPING SYSTEM", according to claim 1 is **characterized by** the combination of the overrunning system by roller and cam and the elastomer damping system, both operating simultaneously during the operation of the Pulley.
